**Europäisches Patentamt**

**European Patent Office**

**Office européen des brevets**

(11) Veröffentlichungsnummer: **0 317 688 B1**

# EUROPÄISCHE PATENTSCHRIFT

(45) Veröffentlichungstag der Patentschrift: **29.04.92**

(51) Int. Cl.5: **A61C 8/00**

(21) Anmeldenummer: **87810699.6**

(22) Anmeldetag: **26.11.87**

(54) **Kieferimplantat.**

(43) Veröffentlichungstag der Anmeldung:
**31.05.89 Patentblatt 89/22**

(45) Bekanntmachung des Hinweises auf die
Patenterteilung:
**29.04.92 Patentblatt 92/18**

(84) Benannte Vertragsstaaten:
**AT CH DE FR GB IT LI NL SE**

(56) Entgegenhaltungen:
**DE-A- 3 421 056**
**US-A- 2 745 180**
**US-A- 2 857 670**
**US-A- 3 497 953**

(73) Patentinhaber: **Prezmecky, László**
**Grundackerstrasse 20/E**
**CH-4414 Füllinsdorf(CH)**

(72) Erfinder: **Prezmecky, László**
**Grundackerstrasse 20/E**
**CH-4414 Füllinsdorf(CH)**

(74) Vertreter: **Seehof, Michel et al**
**c/o AMMANN PATENTANWAELTE AG BERN**
**Schwarztorstrasse 31**
**CH-3001 Bern(CH)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung bezieht sich auf ein Kieferimplantat mit einem als Hülse ausgebildeten Gewindestift nach dem Oberbegriff des Patentanspruchs 1.

Ein wichtiges Ziel sämtlicher Implantate, auch Kieferimplantate, ist eine wirkungsvolle Verankerung im Knochen, die durch vielfältige Massnahmen erzielt werden kann. So sind Kieferimplantate mit starren Flügeln bekannt, die hauptsächlich der Rotationsstabilität dienen, und Implantate, dessen Implantatkörper sich konisch verjüngt sowie Tragrippen aufweist. Solche vorbekannte Implantate benötigen entweder einen relativ grossen Bohrkern und/oder eine grosse Verankerungslänge. Dies kann jedoch insbesondere bei Patienten mit dünnen Kieferknochen zu Komplikationen führen, resp. dazu, dass solche Implantate überhaupt nicht eingesetzt werden können.

So kennt man aus den US-A-2 745 180 und US-A-2 857 670 Kieferimplantate zwecks Rekonstituierung von Zähnen, die einen als Hülse ausgebildeten Stift mit Innengewinde aufweisen und mit Retentionsstiften versehen sind, welche aus dem Stift herausbewegbar sind und dabei in die Spongiosa des Kieferknochens eindringen.

Da diese Retentionsstifte sowohl am Aussenende als auch am Innenende, das am Gewinde einer Verriegelungsschraube zur Anlage kommt, welche die Retentionsstifte nach aussen bewegt, zugespitzt sind, treten Schwierigkeiten auf. Erstens wird die Spongiosa beim Eintreten der Retentionsstifte nach allen Seiten verdrängt, und dies ist bei Personen mit dünnen Kieferknochen problematisch. Zweitens tritt die innere Spitze jedes Retentionsstiftes in das Gewinde der Verriegelungsschraube ein, und dies führt beim Drehen dieser Schraube zu hohen Reibungskräften und zu einem Verklemmen der Stifte in ihren Führungsbohrungen. Zudem besitzen diese bekannten Gewindestifte kein Aussengewinde und sind konisch, so dass der Halt in der zuvor angebrachten Kieferbohrung beim Betätigen der Verriegelungschraube nicht immer gewährleistet ist.

Die US-A-3 497 953 offenbart einen zylindrischen Gewindestift mit Aussengewinde, der am Grunde bandförmige, gezahnte Retentionsstifte enthält, die aus der Stifthülse nach unten austreten und seitlich in den Kieferknochen eindringend abgelenkt werden. Die Konstruktion ist aufwendig und verlangt sehr hohe Schraubkräfte zum Hinausdrücken der Retentionsmittel.

Es ist demgegenüber Aufgabe der vorliegenden Erfindung ein Kieferimplantat anzugeben, das eine geringe Verankerungslänge sowie einen relativ kleinen Bohrdurchmesser benötigt und daher insbesondere für Personen in Frage kommt, die einen dünnen Kieferknochen aufweisen. Diese Aufgabe wird mit einem in den Ansprüchen beschriebenen Kieferimplantat gelöst.

Die Erfindung wird im folgenden anhand einer Zeichnung eines Ausführungsbeispiels näher erläutert.

Figur 1 zeigt im Längsschnitt ein Ausführungsbeispiel des erfindungsgemässen Kieferimplantates,

Figur 2 zeigt das Implantat gemäss Figur 1 im eingesetzten Zustand, und

Fig. 3 zeigt das Implantat gemäss Fig. 2 von oben.

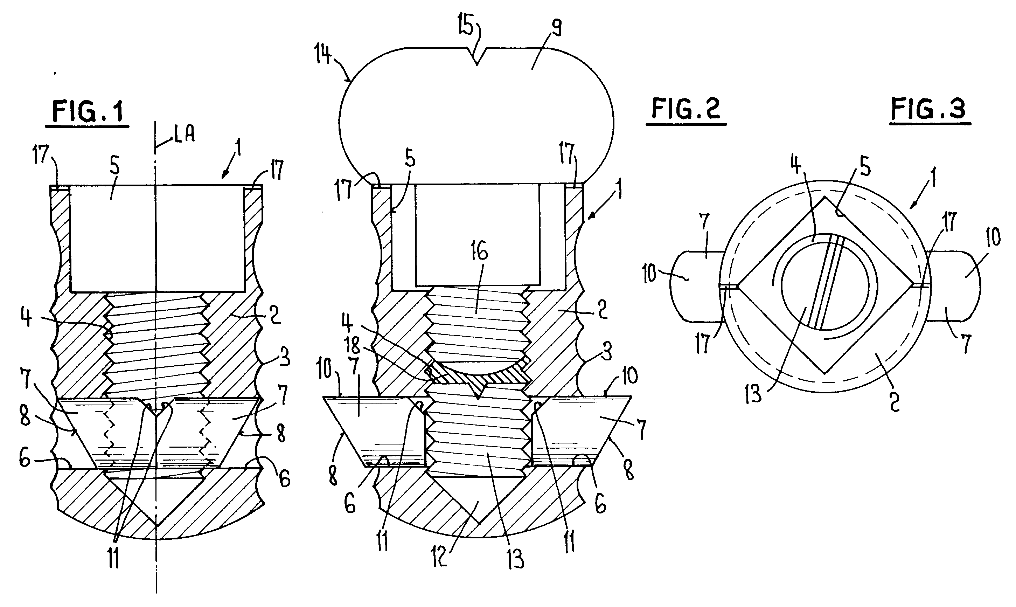

In Fig. 1 erkennt man das Kieferimplantat 1, mit einem als Hülse ausgebildeten zylindrischen Gewindestift 2, der aussen ein Gewinde oder Rippen 3 zum Eindrehen in den Kieferknochen aufweist. Im Innern weist die Hülse ein Gewinde 4 und am oberen Ende eine viereckige Oeffnung 5 zum Ansetzen eines Steckwerkzeuges auf. Die Einstecköffnung 5 kann beispielsweise auch sechseckig sein. Im unteren Teil des Gewindestiftes ist senkrecht zur Längsachse LA eine Querbohrung 6 angeordnet, in welcher zwei Retentionsstifte 7 lose angeordnet sind. Die äusseren Enden 8 der Retentionsstifte sind angeschrägt, derart, dass die zum Implantatträger 9 (Fig. 2) hinweisenden Seiten 10 länger sind als die Unterseiten. Die beiden inneren Oberkanten 11 der Retentionsstifte sind abgeschrägt, wie dies aus Fig. 1 hervorgeht, so dass die Spitze 12 einer Verriegelungsschraube 13 daran angreifen kann, um die Retentionsstifte in die in Fig. 2 gezeigte Stellung herauszuschieben.

Wichtig für eine gute Verankerung ist, dass der Abstand zwischen der Oberseite 10 der Retentionsstifte und dem Abschluss des Stiftes gross genug ist, dass diese Oberseite unterhalb der harten Corticalis zu liegen kommt und die Retentionsstifte in die relativ weichere Spongiosa hinausgetrieben werden. Beispielsweise kann bei einer Gesamtlänge des Implantates von 10 mm die Oberkante 10 etwa 6 mm unterhalb der Oberkante des Implantates angeordnet sein. Dabei kann der Durchmesser des Implantates bei 6 mm liegen.

Der Implantatträger 9 ist mit einer kugelförmigen Oberfläche 14 mit einem Schlitz 15 zum Eindrehen desselben ausgebildet, wobei in diesem Beispiel die Prothese oder Prothesenträger mittels saugnapfförmigen, gummielastischen Haftmitteln darauf befestigt werden kann. Der Implantatträger weist ferner einen Gewindeschaft 16 auf, der in die Bohrung 4 des Gewindestiftes passt.

Um das Implantat einzubringen wird zunächst mit einem Knochenfräser, dessen Durchmesser geringer ist als der Durchmesser des Implantates, beispielsweise bei einem Implantatsdurchmesser von 6 mm mit einem Durchmesser von 5 mm ein Kernloch gebohrt, dessen Tiefe um etwa 1 mm grösser ist als die Länge des Implantates. Daraufhin wird das Implantat mit Hilfe eines der Oeffnung 5 angepassten Steckschlüssels eingedreht, woraufhin die Verriegelungsschraube 13 hineingedreht wird, um die Retentionsstifte 7 um etwa je 1,5 mm hinauszutreiben. Die Aussenfläche des Gewindestiftes kann auch längsgerichtete Nuten aufweisen, um ein selbstschneidendes Gewinde zu bilden, bzw. dessen Schneidwirkung zu erhöhen.

Da die Retentionsstifte lose im Implantatkörper eingelegt sind, ist es unerlässlich, die Verriegelungsschraube bereits vor dem Eindrehen des Implantates einzusetzen, um die Retentionsstifte zu blockieren. Um ein zuverlässiges Funktionieren zu gewährleisten, müssen die Retentionsstifte genau eingepasst werden. Nach der Verankerung des Implantates wird auf diesem eine Heilungskappe, die einen in das Gewinde 4 passenden Gewindeschaft aufweist, aufgeschraubt. Nach dem Heilen kann dann der Implantatträger auf das Implantat angebracht und befestigt werden. Um das Eindringen von Krankheitserregern in die Bohrung zu verhindern, wird zwischen dem Kopf der Verriegelungsschraube 13 und dem Gewindeschaft 16 ein bakteriendichter Verschluss 18, beispielsweise aus einem gummielastischen Material, angeordnet.

Falls das Implantat zur Befestigung anderer Träger dienen soll, kann auf der Basis des Implantates beispielsweise ein Laborimplantat erstellt werden oder aber ein anderer Implantatträger eingeschraubt werden, in welchen ein weiterer Gewindestift eingeschraubt werden kann, der mit einer Goldkappe versehen ist und als Befestigung für einen abnehmbaren Steg dient.

Als Materialien kommen für das Implantat die üblichen in der Dentaltechnik verwendeten Materialien in Frage, beispielsweise Metall- oder Edelmetall-Legierungen, sowie Titan oder Keramik. Ausserdem können auch mehr als zwei Retentionsstifte, auch mit anderer Spitze, verwendet werden.

Um das Implantat bezüglich der Retentionsstifte orientieren zu können, sind oben zwei Markierungssicken 17 angebracht, die in Richtung dieser Stifte zeigen.

Aus obiger Beschreibung geht ferner hervor, dass das erfindungsgemässe Implantat weitere Vorteile aufweist, wie einfache Instrumentation und einfache Röntgenapparatur, die sich in jeder Zahnarztpraxis befindet. Ausserdem erfordert die dazugehörende Implantationstechnik keine Spezialausbildung.

**Patentansprüche**

1. Kieferimplantat, mit einem hülsenförmigen Stift (2) mit Innengewinde und mit zwei senkrecht zur Stiftachse (LA) angeordneten, mittels einer im Gewindestift (2) betätigbaren Verriegelungsschraube (13) radial herausschiebbaren Retentionsstiften (7), die subcortical in der Spongiosa des Zahnkieferknochens befestigbar sind, dadurch gekennzeichnet, dass der Gewindestift (2) zylindrisch ausgebildet und mit einem Aussengewinde zum Eindrehen in den Kieferknochen versehen ist, dass die Aussenseiten (8) der Retentionsstifte (7) abgeschrägt sind, wobei deren Implantatsträger-seitige Enden (10) länger sind als die zum Implantatsende weisenden Seiten, und dass die Innenkanten (11) der längeren Seiten (10) abgeschrägt sind, um das Eindringen der Spitze (12) der Verriegelungsschraube zu erleichtern.

2. Kieferimplantat nach Anspruch 1, dadurch gekennzeichnet, dass die Retentionsstifte (7) senkrecht zur Längsachse geschnitten sind.

3. Kieferimplantat nach Anspruch 1 oder 2, dadurch gekennzeichnet, dass es eine vier- oder sechseckige Einsecköffnung (5) zur Aufnahme eines Eindrehwerkzeuges aufweist.

4. Kieferimplantat nach einem der Ansprüche 1 bis 3, mit einem Implantatträger (9), dadurch gekennzeichnet, dass zwischen der Verriegelungsschraube (13) und dem in die Bohrung (4) des Gewindestiftes (2) des Implantates (1) passenden Gewindeschaft (16) des Implantatträgers (9) ein bakteriendichter Verschluss (18) aus einem gummielastischen Material angeordnet ist.

**Claims**

1. A jaw-bone implant comprising an internally threaded, bush-shaped pin (2) and two retention pins (7) which are arranged perpendicularly to the pin axis (LA) and adapted to be radially pushed out by means of a locking screw (13) which is actuatable inside the threaded pin (2), said retention pins (7) being adapted to be secured subcortically in the spongiosa of the tooth jaw bone, characterized in that the threaded pin (2) has a cylindrical configuration and is provided with an external thread for threading it into the jaw bone, that the external sides (8) of the retention pins (7) are slanted, the ends (10) on the side of the implant support being longer than the sides facing the implant end, and that the internal edges (11) of the longer sides (10) are bevelled in order to facilitate the penetration of the point (12) of the locking screw.

**2.** A jaw-bone implant according to claim 1, characterized in that the retention pins (7) are cut perpendicularly with respect to their longitudinal axis.

**3.** A jaw-bone implant according to claim 1 or 2, characterized in that it is provided with a rectangular or a hexagonal socket (5) for receiving a thread-in tool.

**4.** A jaw-bone implant according to any one of claims 1 to 3, comprising an implant support (9), characterized in that between the locking screw (13) and the threaded shaft (16) of the implant support (9), which fits into the bore (4) of the threaded pin (2) of the implant, a closure (18) of a rubber-elastic material which is impermeable to bacteria is provided.

**Revendications**

**1.** Implant d'os maxillaire, comprenant une cheville (2) taraudée en forme de douille, et deux tiges de rétention (7) disposées perpendiculairement à l'axe (LA) de la cheville et capables d'être poussées radialement vers l'extérieur au moyen d'une vis de verrouillage (13) actionnable à l'intérieur de la cheville taraudée (2) et adaptées à être sous-corticalement fixées dans la spongieuse de l'os maxillaire dentaire, caractérisé en ce que la cheville taraudée (2) est de conformation cylindrique et pourvue d'un filet extérieur pour l'introduire en vissant dans l'os maxillaire, que les côtés extérieurs (8) des tiges de rétention (7) sont obliques, leurs extrémites (10) du côté du support d'implant étant plus longues que les côtés en regard de l'extrémité de l'implant, et que les arêtes intérieures (11) des côtés plus longs (10) sont chanfreinées afin de faciliter la rentrée de la pointe (12) de la vis de verrouillage.

**2.** Implant d'os maxillaire selon la revendication 1, caractérisé en ce que les tiges de rétention (7) sont coupées perpendiculairement à l'axe longitudinal.

**3.** Implant d'os maxillaire selon la revendication 1 ou 2, caractérisé en ce qu'il présente une ouverture d'emmanchement (5) rectangulaire ou hexagonale pour recevoir un outil d'introduction.

**4.** Implant d'os maxillaire selon l'une quelconque des revendications 1 à 3, comprenant un support d'implant (9), caractérisé en ce qu'une clôture (18) imperméable aux bactéries en matière de gomme élastique est disposée entre la vis de verrouillage (13) et la tige filetée (16) du support d'implant (9) adaptée à l'alésage (4) de la cheville taraudée (2).

FIG.1  FIG.2  FIG.3

EP 0 317 688 B1